Europäisches Patentamt

European Patent Office

Office européen des brevets

(11) Publication number: **0 220 838 B1**

## EUROPEAN PATENT SPECIFICATION

(45) Date of publication of patent specification: **15.12.93**     (51) Int. Cl.5: **G02F 7/00**, G02F 3/00

(21) Application number: **86307383.9**

(22) Date of filing: **25.09.86**

(54) **Optical and acoustic signal processing apparatus.**

(30) Priority: **23.10.85 GB 8526126**

(43) Date of publication of application:
**06.05.87 Bulletin 87/19**

(45) Publication of the grant of the patent:
**15.12.93 Bulletin 93/50**

(84) Designated Contracting States:
**AT BE CH DE FR GB IT LI LU NL SE**

(56) References cited:
**FR-A- 2 228 323**

**PROC. SOC. PHOTO-OPT. INSTRUM. ENG.,
vol. 437-21, 1983, pages 125-136; J.P.
FLEURET: "Prospective ideas towards optical computing"**

**APPLIED OPTICS, vol. 21, no. 21, 1st November 1982, pages 3834-3838, Optical Society of America, New York, US; C. HANNEL et al.:
"New concept for optical residue processors"**

(73) Proprietor: **Yang, Tai-Her
5-1 Taipin Street
Si-Hu Town Dzan-Hwa(TW)**

(72) Inventor: **Yang, Tai-Her
5-1 Taipin Street
Si-Hu Town Dzan-Hwa(TW)**

(74) Representative: **Arthur, Bryan Edward et al
Withers & Rogers
4 Dyer's Buildings
Holborn
London EC1N 2JT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 220 838 B1

**Description**

This invention relates to both optical and to acoustic signal processing arrangements and relates generally to such arrangements in which two or more analogue or digital input signals interact in a processor to generate one or more output signals. The invention relates particularly to logic elements including AND gates and to computing apparatus utilising such elements. The invention also relates to signal decoders and encoders.

Both mechanical and electrical signal processing devices are well known, particularly the latter, and programmable electronic digital computers are able to process an input signal by performing virtually any desired number of signal processing operations on an input signal, in accordance with a stored program. Mechanical calculators are also known, but have the crippling disadvantages that they are slow in response, expensive, and difficult to maintain. Even electronic computers have their limitations, being susceptible to spurious noise and high temperatures and having limited speed of operation, particularly when the input data is processed in a complicated manner.

The present invention utilises the wave properties of optical and acoustic signals to process these signals by means of diffraction and interference between them.

In an article in Proc. Soc. Photo-opt. Instrum Eng, vol 437-21, 1983 pp 125-136 by J P Fleuret entitled "Prospective ideas towards optical computing", which has been taken as the starting point of the present claims, the principles underlying a proposal for an optical adder are discussed. In that proposal the AND function needed to generate the carries requires two stages. The present invention, which is defined in the appended claims, represent an improvement in that the AND function is generated in a single stage.

Embodiments of the invention will now be described by way of example only, with reference to Figures 1 to 5 of the accompanying drawings, of which:-

Figure 1 is a schematic representation of one optical logic processing device in accordance with the invention;

Figure 2 is a schematic representation of a further optical logic processing device in accordance with the invention;

Figure 3 is a sketch perspective view showing in detail a gate utilised in the device of Figure 2;

Figure 4 is schematic representation of a further optical logic processing device in accordance with the invention;

Figure 5 is schematic representation of a device similar to that shown in Figure 4, illustrating the important dimensions;

Figure 6 shows plots of optical amplitude along the wall 5 of the apparatus shown in Figures 4 and 5 for different input signals;

Figure 7 is a schematic representation of an optical decoder in accordance with the invention;

Figure 8 is a sketch perspective view of the optical fibres g shown in Figure 7;

Figure 9 is a schematic representation of a multi-step optical logic processing device in accordance with the invention; and

Figure 10 is a schematic representation of an acoustic logic processing device in accordance with the invention.

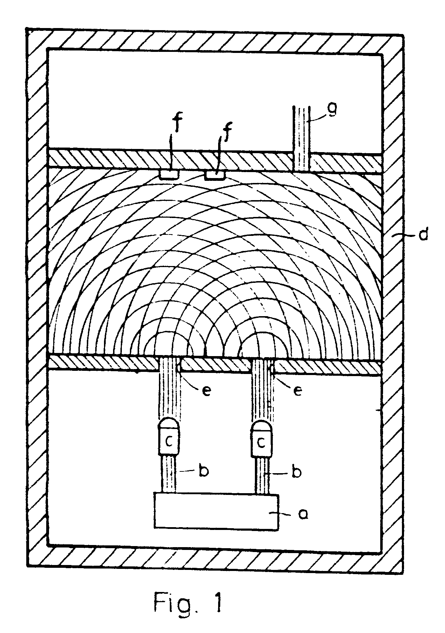

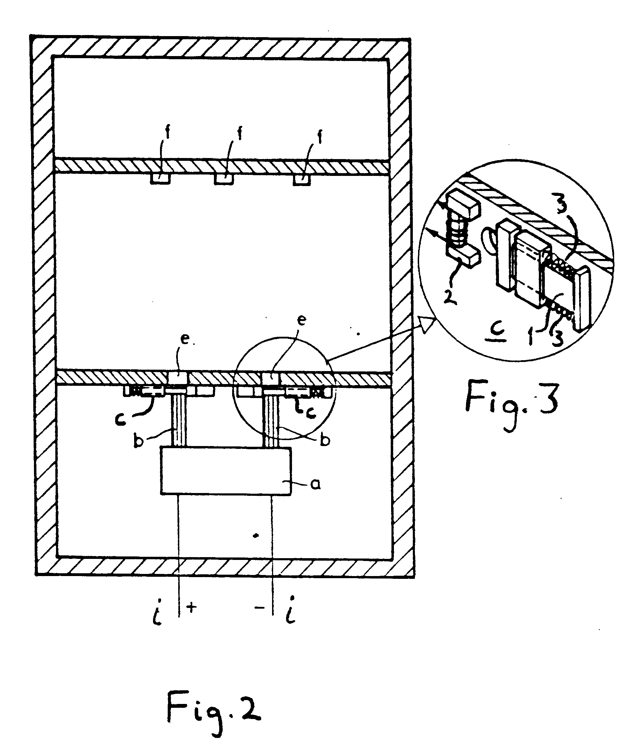

Referring to Figure 1, the processing device shown comprises a monochromatic light source a (which may be) for example a laser, or a filter hood in combination with a common light source) which feeds monochromatic radiation along bundles of optical fibres of b to shutters c and then to narrow aperatures e. The radiation directed along optical fibres b need not be of visible wavelength but may for example be infra-red radiation and the terms "light" and "optical" are to be construed accordingly. The radiation is diffracted as shown and impinges upon photo-detectors f which are located at predetermined positions on an opposite wall of an enclosure d which houses the apparatus. The output signals of these photo detectors are a function of the optical input signals transmitted through the shutters c as will be subsequently described in more detail. a light transmission element g is provided for conducting light which strikes the wall opposite the apertures e to a further processing stage or to other apparatus (not illustrated). The shutters c may be mechanically operated, or may be solid state devices operated by a magnetic or an electric field for example, or may comprise a body of material which changes its transmissivity independent upon an electric current applied thereto, for example.

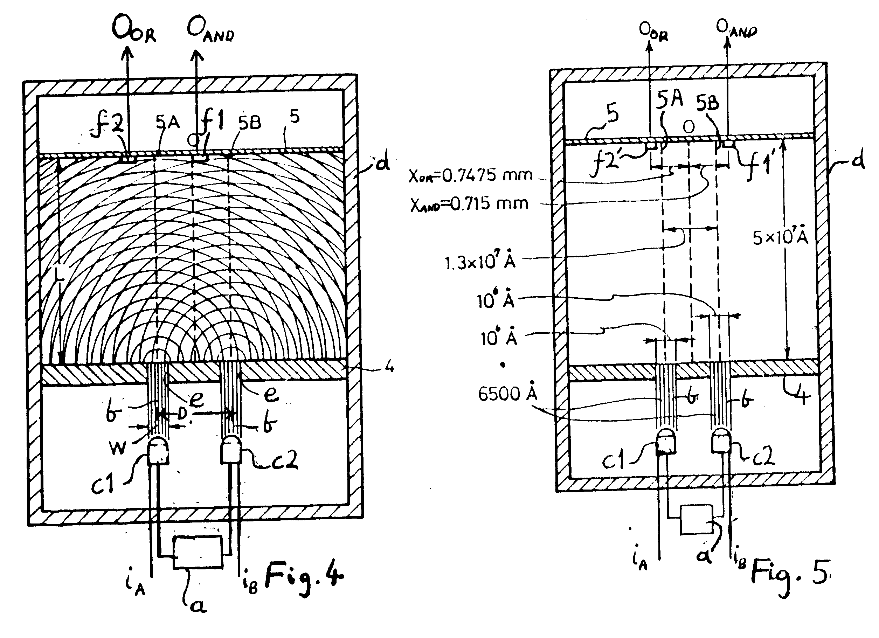

Figures 2 and 3 show a device in which the shutter c is an electromechanical gate 1 operated by an electromagnet 2 and biased against the action of the electromagnet by compression springs 3. Light source a is shown connected to two electrical inputs i which control the respective shutters c. Output leads (not shown) for photo detectors f generate electrical signals dependent upon the inputs applied to inputs i and thus the device can be used in any electrical signal processing arrangment. In Figure 2, three photo-detectors f are shown but it will be appeciated that any desired number of such photo detectors may be utilised, as will subsequently become clear.

Figure 4 shows a processor similar to that shown in Figures 2 and 3, but having solid state electronic shutters c1 and c2 controlled by electrical inputs $i_A$ and $i_B$ respectively. These shutters feed light to apertures e via optical fibres b, the distance between apertures e being D and the width of each aperture being W. Wall 5 is spaced a distance L away from wall 4 in which the apertures E are formed and carries a first photo-detector f1 which is located approximately on the centre line O between the two apertures e and a further photo-detector f2 which is displaced to one side of centre line O. When light is conducted through both optical fibres B, the light is diffracted to form two adjacent semi-circular wave fronts as shown. The spacing between adjacent semi-circles represents one wave length and is of course greatly exaggerated for the sake of clarity. The diffracted wave fronts form an interference pattern on wall 5 which, if it is assumed that the apertures e are in the form of parallel slits extending perpendicular to the plane of the drawing, comprises a series of alternate light and dark bars. The spacing between adjacent light regions (i.e. between regions of constructive interference) is proportional to the distance L and is considerably greater than the wave length of the light provided that the distance D between the slits is small in comparison with the distance L between walls 4 and 5. The photo sensitive areas of the sensors f1 and f2 are equal to or smaller than the areas of the light and dark bars.

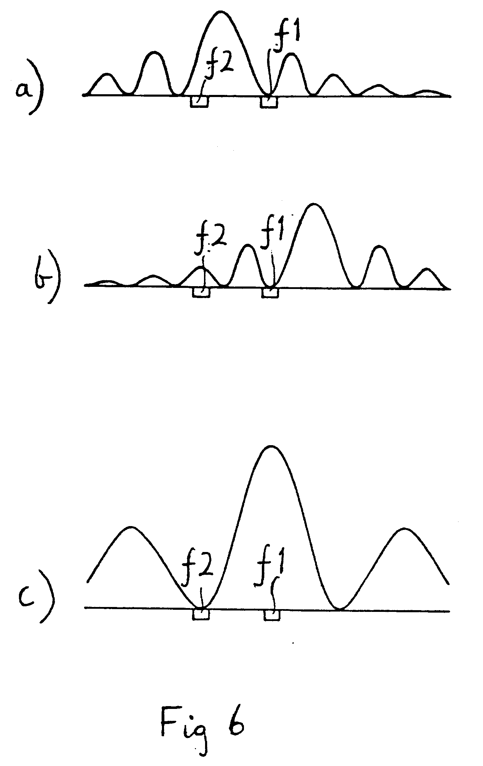

The interference pattern formed on wall 5 in the apparatus of Figure 4 is illustrated in Figure 6(C), which is a plot of light intensity: distance along wall 5. It will be seen that in the condition shown in Figure 4, in which light emerges from both apertures e, photo-detector f1 lies in a region of constructive interference and is fully illuminated whereas photo-detector f2 lies in a region of destructive interference and is not illuminated. Figure 6(A) shows the diffraction pattern formed on wall 5 when shutter c1 is open and shutter c2 is closed and it will be seen that in this condition only the photo-detector f2 is illuminated. The same result is achieved in the condition shown in Figure 6(B), which shows the diffraction pattern resulting when shutter c2 is open and shutter c1 is closed. Thus, the output $O_{AND}$ of photo-detector f1 is an AND function of the input signals $i_A$ and $i_B$ applied to shutters c1 and c2 whereas the output $O_{OR}$ of photo-detector f2 is an OR function of input signals $i_A$ and $i_B$. Thus, the processor shown in Figure 4 can be used as an AND gate or an OR gate. In the above analysis, it has been assumed that the light intensities from the two shutters c1 and c2 in their open state have been equal.

In the case in which light is emitted from only one slit e, the distance $X_{DIM}$ from the centre line O at which a photodetector $\gamma$ should be located to lie in a dark region of the diffraction pattern is given by:

$$X_{DIM} = \frac{m \lambda L}{W} \pm \frac{D}{2}, \quad m = 0,1,2,3,4,\ldots\ldots\ldots\ldots$$

where $\lambda$ is the wave length of the light. Similarly the distance $X_{BRT}$ from the centre line O at which a photo-detector $\gamma$ should be located to lie in a bright region of such a diffration pattern is given by:

$$X_{BRT} = \frac{(m + \frac{1}{2})\lambda L}{W} \pm \frac{D}{2}, \quad m = 0,1,2,3,4\ldots\ldots\ldots\ldots$$

In the case in which light is emitted from both slits e, the corresponding distances $X'_{BRT}$ and $X'_{DIM}$ are:

$$X'_{BRT} = \frac{n \lambda L}{2D}, \quad n = 2,4,6,8\ldots\ldots\ldots\ldots\ldots\ldots$$

$$X'_{DIM} = \frac{n \lambda L}{2D}, \quad n = 1,3,5,7\ldots\ldots\ldots\ldots\ldots\ldots$$

In general, the appropriate distances X can be determined by finding values of n and m which make $X'_{DIM}$ and/or $X'_{BRT}$ = $X'_{BRT}$ or $X'_{DIM}$, depending on the logical function required, ie. whether an AND AND gate or an OR gate or some other logic element is desired. In certain cases it may be necessary to adjust either D or W or L or even $\lambda$. Further flexibility may be obtained by using different wave lengths $\lambda$ for the

3

light emitted through the two apertures e or by making the apertures e of different width W or by shaping wall 5 so as to vary the distance L. However, such adjustments increase the complexity of the analysis and will not usually be necessary. Another factor which could be varied is the relative phase of the light emitted from the two slits e. In the following anaylsis, it will be assumed that the light from the two slits is in phase and is coherent.

Thus, the design of a logical processor in accordance with the invention will involve the following stages:

a. To predetermine and design the functions of the logic processing grid.

b. To predetermine and design all the inputs and the required outputs (including the input/output lights and circuits) of the logic processing grid.

c. To list the individual true and false charts between the output and input (the so-called ON-OFF relationship).

d. To design the light source parameters such as the number of light sources (according to the inputs) the light source wavelength, and phase difference (if any).

e. To pre-set the dimension and size of the light grid, such as D, L and W values.

f. According to the factors of the terms b,c and d and the pre-set dimension of the term e, the position of the output point is analysed and designed. If the said position cannot be located by this way, it may be necessary to revert to the term by re-determining the light source and re-setting the dimension of the light grid or dividing the branch grid, and then revert to the term d;

further, its grids are designed respectively according to the relationships between various single factors and then their relationships between them are joined and finally merged one by one to the maximum possible merging limit.

Having decided on the logical function required, it is necessary to list all the input terms of this logic, to tabulate the true and false relationships between the inputs and outputs, to set the dimensions D and L in view of the light source wavelength (S) $\lambda$ and phase difference (if any) and to locate the positions of the photodetectors F on the wall 5.

An example of such a design process is given below and relates to the dimensions shown in Figure 5. The distance L is set at $5 \times 10^7$ Å the dimensions W are set at $10^6$ Å and the spacing D is set at $1.3 \times 10^7$ Å. The following analysis shows how the desired distances $X'_{OR}$ and $X'_{AND}$ for photo-detectors f2 having an OR output and f1 having an AND output can be derived.

It is assumed: the grid functions are OR and AND functions of the two input terms;

the input is two input red lights ( $\lambda$ = 6500 Å)

the true/false values of the output and input are:

| $I_1$ | | H | H | L | L |
|---|---|---|---|---|---|
| $I_2$ | | H | L | H | L |
| | | | | | |
| AND | | H | L | L | L |
| OR | | H | H | H | L |

the light source comprises two input red lights with a wavelength 6500 Å (from a filtered light or a stable laser source) and the two light sources are in the same phase (from the same light source).

It is assumed the dimensions of the light grid are:

L = $5 \times 10^7$ Å

$W_1$ = $10^6$ Å

$W_2$ = $10^6$ Å

D = $10^7$ Å

Then from the true/false table, we know:

4

$$(1)..X_{AND} = \frac{n_1 \lambda}{2} \frac{L}{D}, \text{ where } n_1 = 2,4,6,8.....................................$$

$$= \frac{(m_1 \lambda)}{W_1} L \pm \frac{D}{2}, \text{ where } m_1 = 1,2,3,4,.................$$

$$= \frac{(K_1 \lambda)}{W_2} L \mp \frac{D}{2}, \text{ where } K_1 = 1,2,3,4.................$$

$$(2)..X_{OR} = \frac{n_2 \lambda}{2} \frac{L}{D}, \text{ where } n_2 = 2,4,6,8.........................$$

$$= \frac{(m_2 + \frac{1}{2})(\lambda L)}{W_1} + \frac{D}{2}, \text{ where } m_2 = 1,2,3,4.............$$

$$= \frac{(K_2 + \frac{1}{2})(\lambda L)}{W_2} + \frac{D}{2}, \text{ where } K_2 = 1,2,3,4.............$$

in which $X_{AND}$ is the distance of the AND output detection element $\gamma 1'$ on the screen 5 away from centre line O;

$X_{OR}$ is the distance of the OR output detection element $\gamma 2'$ from the centre line O.

From the equation (1):

$$\frac{(m_1 \lambda)}{W_1} L \pm \frac{D}{2} = \frac{(K_1 \lambda)}{W_2} \mp \frac{D}{2}$$

$$\Longrightarrow \frac{m_1 \lambda}{W_1} L = \frac{(K_1 \lambda)}{W_2} L \pm D$$

$$\Longrightarrow \frac{m_1 \lambda \times 5 \times 10^7 \text{ Å}}{10^6}$$

$$= \frac{K_1 \lambda \times 5 \times 10^7 \text{ Å} + 10^7 \text{ Å} \times 10^6 \text{ Å}}{10^6 \text{ Å}}$$

$$m_1 = K_1 \lambda \pm \frac{10^6 \text{ Å}}{5}$$

$$m_1 = K_1 \pm \frac{10^6 \text{ Å}}{5 \times 6500 \text{ Å}}$$

$$(3)..m_1 = K_1 \pm \frac{10^6 \text{ Å}}{32500 \text{ Å}} \text{ where } m_1 = 1,2,3,4.......................................$$

Since

$$\frac{10^6 \text{ Å}}{32500 \text{ Å}}$$

is not an integer, it is unfittable.

To revert the light grid dimension, given D = 9.75 x $10^6$ Å (or 3.25 P x $10^6$ Å, where P = 3)

5

Then, the above equation (3) becomes : $m_1 = K_1 \pm$
$$9.75 \times 10^5 \text{ Å}$$
$$3.25 \times 10^4 \text{ Å}$$

(4) $\qquad = K_1 \pm 30 \text{ (or } K_1 \pm 10P)$

Here, assume $K_1 = 2$, then $m_1 = 32$, and

$$\frac{n_1 \lambda}{2} \cdot \frac{L}{D} = \frac{m_1 \lambda}{W_1} \cdot L \pm \frac{D}{2}$$

(5) $\qquad$ thus $n_1 = (64 \pm 30) \times 9.75$ (or $n_1 = (64 \pm 30) \times 3.25P$

As $n_1$ is an integer, it is unfittable.
From the equations (4) and (5):

$$m_1 = K_1 \pm 10P$$
$$n_1 = (2 m_1 \pm 10P) \times 3.25P$$

So P must be chosen such that $3.25 \times P$ is an integer;
putting $P = 4$, gives $3.25 P = 3$.
Reverting to the light grid dimension, given $D = 1.3 \times 10^7$ A, from the equation (1), $m_1 = K_1 \pm 40$, assume $K_1 = 2$, $M_1 = 42$,
then $n_1 = (2m_1 - 10 P) \times 13 = 572$,

$$\text{So } X_{AND} = \frac{n_1 \lambda}{2} \cdot \frac{L}{D} = 7.15 \times 10^{-2} \text{ cm} = \underline{0.715 \text{ mm}}$$

Similarly $m_2 = 3$, $k_2 = 43$, $n_2 = 598$

$$X_{OR} = 7.475 \times 10^{-2} \text{ cm} = \underline{0.7475 \text{ mm}}$$

During the above design process:

the input and output terms can be multiple terms;

if the output terms are m, while the input terms are n, then the true/false relationship chart of their output terms has $2^n \times m$ relationships, because when the input terms are all false, no functions are available, therefore various equations have $2^n - 1$ equal relationship with a total of $(2^n - 1) \times m$ equal relationship terms, each of which contains an integer to be determined, so such integers must conform to their mutual relationship;

the dimensions and various light source wave lengths and phases to be determined will be variables.

In certain cases in which it is not easy to determine the exact dimensions of the slits e, for example, it may be useful to substitute a translucent screen for the wall 5 and to observe directly the diffraction or interference patterns formed thereon under different input conditions.

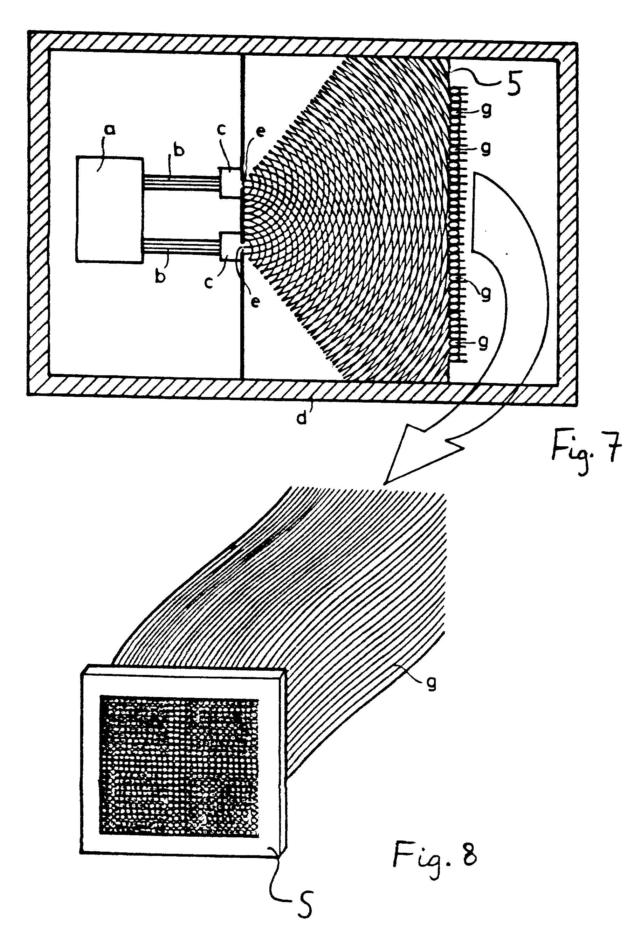

Figures 7 and 8 show an embodiment of the invention in the form of an encoder which uses optical fibers 9 to directly conduct light to form graphics on a screen S. A monochromatic light source is used to supply light to light conducting fibers b which conduct the light into light input control gates c. Gates c are located at apertures e to form diffraction or interference patterns that project onto optical fibres g implanted in predetermined positions on the wall 5 of the closed container. These serve as light-conducting elements. The other ends of the bundled optical fibres g terminate at display screen s. The optical fibres g are arrayed according to pre-set decoding function graphics so as, in conjunction with the input state of the light input control gates c, to generate outputs appropriate to the desired graphics.

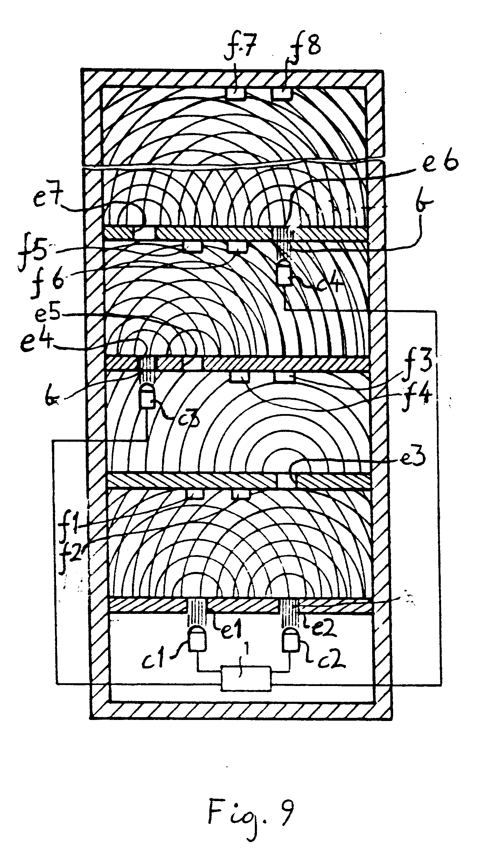

Figure 9 shows a multi-step logical processor in accordance with the invention in which photodetectors F1 and F2 generate outputs which are a first function of the inputs from shutters C1 and C2 and a further aperture E3 diffracts light from the first stage into a second stage to form a diffraction pattern which is analysed by photo-detectors f3 and f4. Some of this light escapes to a third stage via an aperture e5 and this forms a diffraction pattern with light emitted through an aperture e4 from a further shutter c3 which is optically coupled to light source 1. This pattern is analysed in the third stage by photo-detectors f5 and f6. Some of the light from this stage escapes to a fourth stage via aperture e7 where it forms an interference pattern with light emitted via an aperture e6 on a shutter c4, the resulting pattern being analysed by photodetectors f7 and f8. It will be appreciated that such an arrangement is especially suited to analogue signal processing.

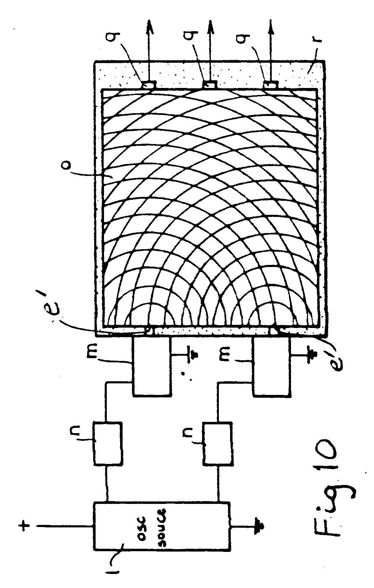

The signal processors described above have all utilised diffraction and/or interference between light waves, but it will be appreciated that the invention is also applicable to processors working on similar principles but using acoustic waves. Figure 10 shows such an acoustic signal processor in accordance with the invention.

An electric oscillator l feeds two electro-acoustic transducers m via switching gates n with in-phase AC. Transducers m feed acoustic waves into a medium o via slits e'. Medium o may for example be fluid or solid according to the desired wave length. The interfering acoustic waves inpinge on electro-acoustic transducers q which generate AC output signals whose magnitudes depend on whether the transducers lie in regions of constructive or destructive interference. Damping material r is utilised to absorb the acoustic waves to alieviate errors resulting from refraction of the acoustic waves.

The transducers m may for example be electromagnetic or piezo-electric, but preferably the latter.

It will be appreciated that the signal processors described above utilising optical diffraction and interference may be replaced by acoustic processors utlilising acoustic diffraction and interference as illustrated in Figure 10. In particular, the design analysis given for the processor of Figure 5 can be applied to the design of an acoustic signal processor. However, acoustic signal processors in accordance with the invention enable greater design flexibility in certain cases, because it is easy to control the phase relationship between two or more acoustic inputs applied to the apertures e', for example by means of conventional R, L, C circuits. Also, it is easy to adjust the frequencies of two electro acoustic transducers independently, for example, by providing separate independently controlled oscillators.

Although the foregoing description has related mainly to digital signal processors, it will be appeciated that either acoustic or optical signal processors in accordance with the invention may be used for analogue signal processing if photo-detectors or acoustic detectors having linear characteristics are used to analysis the diffraction or interference patterns generated. It should be noted that although the embodiments described all utilise interference between wave patterns having curved wave fronts, this is not an absolutely essential feature, since suitable interference patterns may also be generated by plane wave fronts, the two groups of wave fronts that define the wave patterns being slightly inclined relative to one another. Furthermore, it should be noted that although the curved wave fronts generated in the described embodiments of the invention all originate from small apertures such as slits, it is envisaged that other point sources may be used to generate similar wave patterns.

Further, it should be noted that although the wave patterns illustrated have been two-dimensional, the invention also envisages signal processors utilising three dimensional wave patterns derived from e.g. pinhole sources rather than slits. The detectors utilised to sample the resulting three dimensional interference pattern could then be distributed in two dimensions.

It should be noted that although the described embodiments utilise only two inputs which generate respective wave patterns at two slits, it is possible in principle to provide three or more inputs which generate a corresponding number of wave patterns at three or more respective apertures and to provide detectors for analysing the resulting interference pattern which generates output signals which are a function of the three or more input signals. Thus it is envisaged that logic elements may be provided which perform highly complex logical operations on a multiplicity of inputs in a single stage whereas prior art electronic devices require a number of stages to perform a correspondingly complex operation and are therefore considerably slower in operation.

## Claims

1. A signal processor comprising at least two sources (e) of wave energy arranged to generate diffraction patterns and an interference pattern, means (c) for interrupting the energy from either or each source in response to input signals and detecting means (f,g) for detecting the energy intensity at a predetermined position in the interference pattern, characterized in that the energy sources (e) and the detecting means (f,g) are so arranged that the detecting means lies at an intensity minimum of the diffraction pattern produced by any source when it alone is not interrupted, but at or near an intensity maximum of the interference pattern produced when two sources are not simultaneously interrupted, an output of said detecting means thereby providing in a single stage a logical AND function of the input signals.

**2.** A signal processor according to claim 1 in which the two sources (e) comprise a pair of parallel slits illuminated by monochromatic light.

**3.** A signal processor according to claim 2 in which the detecting means (f,g) is a slit displaced from the plane of symmetry of the source slits by a distance $X_{AND}$ which satisfies the conditions:

$$(1) \quad X_{AND} = \frac{n_1 \, \lambda \, L}{2 \quad D}, \text{ wherein } n_1 = 2,4,6,8\ldots\ldots\ldots\ldots$$

$$(2) \quad X_{AND} = \frac{(m_1 \, \lambda \,)}{W_1} \cdot L \pm \frac{D}{2}, \text{ where } m_1 = 1,2,3,4\ldots\ldots$$

$$(3) \quad X_{AND} = \frac{(k_1 \, \lambda \,)}{W_2} \cdot L \mp D/_2, \text{ where } k_1 = 1,2,3,4\ldots\ldots$$

where $\lambda$ is the wavelength of the light, $W_1$ and $W_2$ are the source slit widths, D is the spacing between centres of the sources slits and L is the distance from a plane through the two sources (e) to a plane parallel to the source plane comprising the detecting means (f,g).

**4.** A signal processor according to claim 2 or claim 3 in which the detecting means include optical fibres arranged according to a pre-set coding function to generate an optical output in accordance with the input signals.

**5.** A signal processor comprising a processor according to any of claims 2, 3 or 4 in which the detecting means comprises an aperture (e2, e3) transmitting light to form a source for a further processor stage.

**6.** A signal processor according to any preceding claim, characterised in that the means (f,g) for detecting the energy intensity in the interference pattern comprises an optical fibre, an optical-electric detecting means and means for directly detecting the optical state of the energy intensity in the interference pattern.

**Patentansprüche**

**1.** Signalverarbeitungsvorrichtung mit mindestens zwei Wellenenergiequellen (e), die dazu angeordnet sind, Brechungsmuster und ein Interferenzmuster zu erzeugen, mit Mitteln (c) zum Unterbrechen der Energie von einer oder beiden Quellen infolge von Eingangssignalen sowie mit Detektoren (f, g) zur Ermittlung der Energieintensität an einer vorbestimmten Stelle innerhalb des Interfrenzmusters,
**dadurch gekennzeichnet**,
daß die Energiequellen (e) und die Detektoren (f, g) derart angeordnet sind, daß der Detektor an einem Intensitätsminimum dem Brechungsmusters liegt, das durch jede der Quellen erzeugt wird, wenn sie alleine nicht unterbrochen wird, jedoch bei oder nahe bei einem Intensitätsmaximum des Interferenzmusters liegt, das dann erzeugt wird, wenn die beiden Quellen nicht gleichzeitig unterbrochen werden, wobei ein Ausgangssignal der Detektoren dabei in einet einzelnen Stufe eine logische AND-Funktion der Eingangssignale liefert.

**2.** Signalprozessor nach Anspruch 1,
**dadurch gekennzeichnet**,
daß die beiden Energiequellen (e) ein Paar von parallelen Spalten aufweisen, die mit monochromatischem Licht beleuchtet werden.

**3.** Signalprozessor nach Anspruch 2,
**dadurch gekennzeichnet**,

daß der Detektor (f, g) ein Spalt ist, der von der Symmetrieebene der Quellenschlitze mit einem Abstand $X_{AND}$ entfernt angeordnet ist, der folgenden Bedingungen genügt:

$$1. \quad X_{AND} = \frac{n_1}{2} \frac{\lambda}{} \frac{L}{D} \qquad \text{mit } n_1 = 2, 4, 6, 8 \ldots$$

$$2. \quad X_{AND} = \frac{(m_1 \, \lambda)}{w_1} \cdot L \pm \frac{D}{2}, \qquad \text{mit } m_1 = 1, 2, 3, 4 \ldots$$

$$3. \quad X_{AND} = \frac{(k_1 \, \lambda)}{w_2} \cdot L \mp D/2, \text{ mit } k_1 = 1, 2, 3, 4 \ldots$$

wobei $\lambda$ die Wellenlänge des Lichtes ist, $W_1$ und $W_2$-Quellen-Spaltbreiten, D der Abstand zwischen den Zentren der Quellen-Spalte und L der Abstand von einer Ebene durch die beiden Quellen (e) zu einer Ebene parallel zur Quellenebene, die die Detektorenelemente (f, g) aufweist.

4. Signalprozessor nach Anspruch 2 oder 3, in welchem die Detektorenelemente optische Faserelemente umfassen, die entsprechend einer vorbestimmten Code-Funktion angeordnet sind, um ein optisches Ausgangssignal in Übereinstimmung mit den Eingangssignalen abzugeben.

5. Signalprozessor nach einem der Ansprüche 1, 2 3 oder 4 umfaßt, in welchem die Detektoranordnung eine Öffnung (e2, e3) aufweist, um Licht als Quelle für eine weitere Prozessorenstufe abzugeben.

6. Signalprozessor nach einem der vorhergehenden Ansprüche,
    **dadurch gekennzeichnet**,
    daß die Detektorenelemente (f, g) zur Ermittlung der Energieintensität im Interferenzmuster ein optisches Faserelement, einen elektro-optischen Detektor und Mittel zur direkten Ermittlung des optischen Zustandes der Energieintensität in dem Interferenzmuster umfassen.

## Revendications

1. Processeur de signaux comprenant au moins deux sources (e) d'énergie d'ondes disposées pour produire des modèles de diffraction et un modèle d'interférences, des moyens (c) pour interrompre l'énergie en provenance de l'une ou l'autre source ou de chaque source en réponse à des signaux d'entrée, et des moyens de détection (f,g) pour détecter l'intensité de l'énergie en une position prédéterminée dans le modèle d'interférences, caractérisé en ce que les sources d'énergie (e) et les moyens de détection (f,g) sont disposés de telle sorte que les moyens de détection se trouvent au niveau d'un minimum d'intensité du modèle de diffraction produit par l'une ou l'autre source lorsque seule, elle n'est pas interrompue, mais au niveau ou près d'un maximum d'intensité du modèle d'interférences produit, lorsque les deux sources : ne sont pas simultanément interrompues, une sortie de ces moyens de détection procurant ainsi en un seul étage une fonction ET logique des signaux d'entrée.

2. Processeur de signaux selon la revendication 1, dans lequel les deux sources (e) comprennent deux fentes parallèles éclairées par une lumière monochromatique.

3. Processeur de signaux selon la revendication 2, dans lequel les moyens de détection (f,g) sont constitués par une fente déplacée du plan de symétrie des fentes de source d'une distance $X_{ET}$ qui satisfait les conditions

(1) $\quad X_{ET} = \dfrac{n_1 \lambda L}{2 \quad D}$, $\quad$ où $\quad n_1 = 2,4,6,8.............$

(2) $\quad X_{ET} = \dfrac{(m_1 \lambda)}{W_1} \cdot L \pm \dfrac{D}{2}$, $\quad$ où $\quad m_1 = 1,2,3,4......$

(3) $\quad X_{ET} = \dfrac{(k_1 \lambda)}{W_2} \cdot L \mp D/_2$, $\quad$ où $\quad k_1 = 1,2,3,4......$

où $\lambda$ est la longueur d'onde de la lumière, $W_1$ et $W_2$ sont les largeurs des fentes de source, D est la distance entre les centres des fentes de source, et L est la distance d'un plan passant par les deux sources (e) à un plan parallèle au plan des sources comprenant les moyens de détection (f,g).

4. Processeur de signaux selon la revendication 2 ou la revendication 3, dans lequel les moyens de détection comprennent des fibres optiques disposées selon une fonction de codage prédéterminée pour produire une sortie optique fonction des signaux d'entrée.

5. Processeur de signaux comprenant un processeur selon l'une des revendications 2, 3 ou 4, dans lequel les moyens de détection comprennent une ouverture (e2,e3) transmettant la lumière pour former une source pour un autre étage du processeur.

6. Processeur de signaux selon l'une des revendications précédentes, caractérisé en ce que les moyens (f,g) pour détecter l'intensité d'énergie dans le modèle d'interférences comprennent une fibre optique, un moyen de détection opto-électrique et des moyens pour détecter directement l'état optique de l'intensité d'énergie dans le modèle d'interférences.

Fig. 1

Fig. 3

Fig. 2

Fig. 4

Fig. 5

$X_{OR} = 0.7475$ mm
$X_{AND} = 0.715$ mm

$1.3 \times 10^7$ Å

$10^6$ Å

$10^6$ Å

$6500$ Å

$5 \times 10^7$ Å

EP 0 220 838 B1

Fig 6

Fig. 7

Fig. 8

Fig. 9

Fig 10